# FASCICULE DE BREVET EUROPEEN

(11) **EP 1 124 081 B1**
(45) Date de publication et mention de la délivrance du brevet: **06.01.2010**
(21) Numéro de dépôt: 01200111.1
(22) Date de dépôt: 15.01.2001
(51) Int. Cl.: F16K 5/02

(54) **Robinet**
Flüssigkeitshahn
Tap

(30) Priorité: 10.02.2000 LU 90520
(43) Date de publication de la demande: 16.08.2001
(73) Titulaire: Torrent Trading Ltd., Road Town, Tortola (VG)
(72) Inventeur: Kerger, Léon, 7382 Helmdange (LU); Schmitz, Jean-Claude, 7340 Heisdorf (LU)
(74) Mandataire: Office Freylinger

(56) Documents cités:
- DE-A- 2 819 927
- DE-A- 4 302 556
- DE-A- 19 603 240
- US-A- 3 788 601
- US-A- 3 967 811
- US-A- 4 128 227
- US-A- 5 421 364
- US-A- 5 692 536
- US-A- 5 899 439

## Description

La présente invention concerne un robinet pour le contrôle de l'écoulement d'un fluide comprenant un corps de robinet, un organe intérieur d'ouverture et de fermeture du passage du fluide, un organe de manoeuvre rotatif extérieur, un moyen de liaison reliant l'organe de manoeuvre à l'organe de fermeture ainsi que des moyens limitant le mouvement de l'organe de manoeuvre et de l'organe d'ouverture et de fermeture dans le sens de l'ouverture du robinet.

Quoique n'y étant pas limitée, l'invention concerne plus particulièrement un robinet pour des bouteilles ou réservoirs contenant du gaz comprimé ou liquéfié. Dans ce genre de robinet, le moyen de liaison peut être une tige et les moyens de limitation du mouvement dans le sens de l'ouverture sont généralement constitués d'une ou de deux broches traversant le corps du robinet dans le sens transversal, perpendiculairement au mouvement de la tige et tangentiellement par rapport à celle-ci. A cet effet, la tige comporte, dans sa région centrale, un étranglement annulaire permettant le passage des deux broches et la rotation de la tige. Ces deux broches et la base de l'étranglement forment des butées et contrebutées définissant la fin de course de la tige et l'arrêt du mouvement d'ouverture du robinet.

L'inconvénient de ce système connu est qu'en fin de mouvement et vu que le robinet est généralement ouvert à fond, l'approche du fond de l'étranglement de la tige des deux broches est tangentielle en raison de la rotation de la tige. Par conséquent, le contact entre la tige et la ou les broche(s) est un contact à friction ou frottement, c'est-à-dire qu'il se produit un serrage progressif, voire un blocage du robinet en position d'ouverture.

Ce serrage ou blocage du robinet demande beaucoup de force manuelle au moment de la fermeture du robinet et incite à l'utilisation d'un outil, tel qu'une pince. Ceci peut toutefois être à l'origine d'imprudences et a déjà occasionné des accidents au moment de l'ouverture du robinet. Il est en effet déjà arrivé qu'un opérateur, en voulant desserrer le robinet avec un outil, a tourné l'organe de manoeuvre dans le mauvais sens, c'est-à-dire dans le sens de l'ouverture, jusqu'à la rupture de la tête du robinet. Ceci peut évidemment constituer un grave danger si les gaz sont nocifs ou explosifs.

Le but de la présente invention est de prévoir un nouveau robinet du genre décrit dans le préambule qui ne présente pas cet inconvénient, c'est-à-dire un robinet sans risque de serrage ou de blocage lorsque le robinet est ouvert à fond.

Pour atteindre cet objectif, l'invention propose un robinet du genre décrit dans le préambule qui est caractérisé en ce que lesdits moyens limitant le mouvement de l'organe de manoeuvre sont constitués par une butée et une contre-butée à contact frontal disposées respectivement sur un élément rotatif et sur le corps du robinet ou vice-versa.

Étant donné qu'il n'y a pas de contact à frottement entre la butée et la contre-butée, il n'y a aucun risque de serrage ou de blocage du robinet. L'opérateur pourra facilement fermer le robinet sans déploiement d'une force excessive et sans risque de se tromper de sens de rotation et de serrer davantage le robinet.

Lors de l'ouverture et à l'avant-dernier tour de rotation de l'organe de manoeuvre, la butée et la contre-butée n'entrent pas encore en contact, ce qui signifie que, lorsqu'elles arrêtent la rotation de l'organe de manoeuvre, elles sont en contact mutuel sur une hauteur qui est inférieure au pas de vis des filetages entre les éléments rotatifs et le corps du robinet.

D'autres particularités et caractéristiques de l'invention ressortiront de la description détaillée d'un mode de réalisation, présenté ci-dessous, à titre d'illustration, en référence aux dessins annexés dans lesquels :
- la figure 1 est une coupe verticale à travers un robinet connu ;
- la figure 2 est une coupe verticale à travers un robinet selon la présente invention et
- la figure 3 est une coupe horizontale à travers le robinet de la figure 2 suivant le plan de coupe III-III.

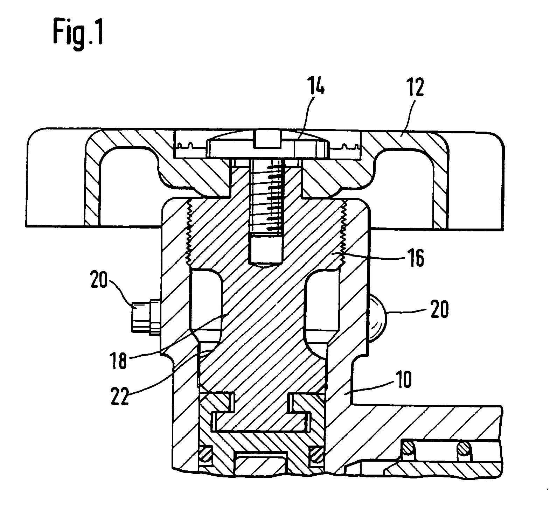

Le robinet connu de la figure 1 dont on n'a représenté que les éléments nécessaires à la compréhension du problème comporte un corps de robinet 10, de préférence en métal, par exemple en bronze. Le robinet est actionné par un volant de manoeuvre 12 qui est fixé à l'aide d'une vis centrale 14 sur une tige 16 qui est vissée dans la partie supérieure du corps 10. Du côté opposé au volant 12, la tige 16 est reliée directement ou indirectement à l'organe de fermeture, non montré, du robinet. Une rotation de l'organe 12 engendre par conséquent un mouvement axial de la tige 16 et de l'organe de fermeture.

La tige 16 comporte, comme le monte la figure 1, dans sa région médiane, un étranglement annulaire 18 de diamètre plus faible que la tête de la tige 16. Par ailleurs, une ou, de préférence, deux broches 20 sont fixées transversalement dans la paroi du corps 10 du robinet et traversent cet étranglement 18. Ces broches 20 empêchent un dévissage complet de la tige 16 et forment une butée d'arrêt lors de l'ouverture du robinet par suite du contact entre le fond 22 de l'étranglement et les broches 20. A cet effet, le fond 22 est arrondi, conformément à la courbure des broches 20.

Toutefois, comme expliqué dans l'introduction, lorsque le robinet est ouvert, le fond 22 de l'étranglement ne vient pas buter sur les broches mais, à cause de la rotation de la tige, il se produit un contact tangentiel à friction ou cisaillement entre la tige 16 et les broches 20, ce qui peut entraîner un serrage excessif ou blocage du robinet dans la position d'ouverture.

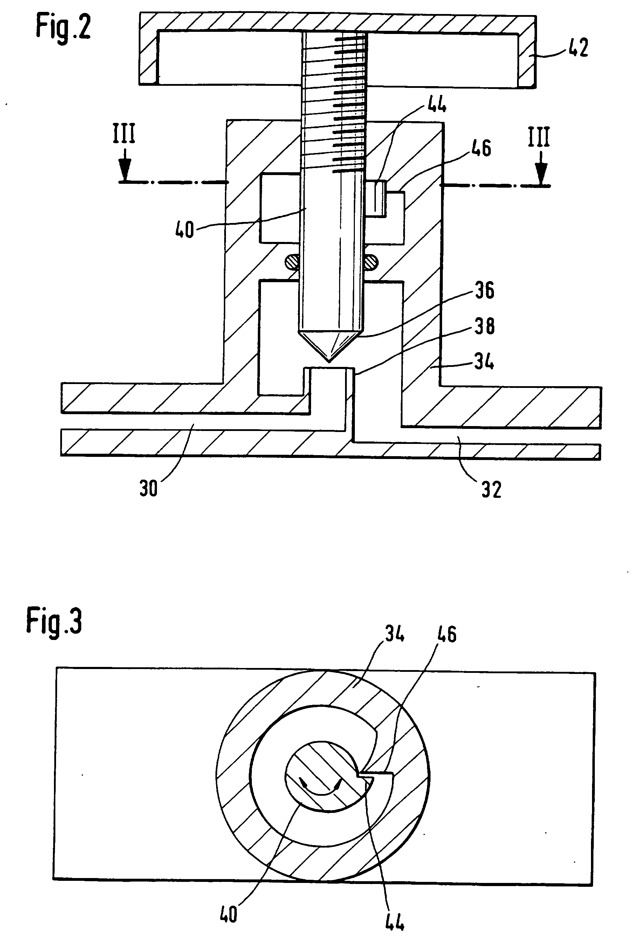

Pour remédier à cet inconvénient, l'invention a proposé un nouveau robinet dont un mode de réalisation est représenté, à titre d'exemple, sur les figures 2 et 3. Ce robinet est destiné à ouvrir et fermer la communication entre deux conduites 30 et 32. Le robinet comporte un corps 34 dans lequel se trouve un organe d'ouverture et de fermeture 36 coopérant avec un siège 38. L'organe de fermeture 36 constitue la partie inférieure d'une tige de liaison 40 qui est disposée axialement dans le corps 34 et qui est solidaire d'un volant de manoeuvre 42 à l'extérieur du robinet. La partie supérieure de la tige de liaison 40 est pourvue d'un filetage extérieur coopérant avec un filetage correspondant dans la tête du corps 34 si bien qu'une rotation du volant 42 provoque une montée ou une descente de la tige 40 suivant le sens de rotation.

Conformément à la présente invention, la tige de liaison comporte une butée radiale extérieure 44, tandis que le corps 34 comporte une contre-butée radiale intérieure 46. La butée 44 et la contre-butée 46 sont disposées de telle manière que, lors de la rotation de la tige de liaison 40, la butée 44 passe en dessous de la contre-butée 46 à l'avant-dernier tour de rotation du volant 42 dans le sens de l'ouverture. En revanche, à la fin du dernier tour de rotation et après la montée d'une hauteur correspondant au pas de vis du filetage de la partie supérieure de la tige de liaison 40, la butée 44 bute sur la contre-butée 46 comme représenté sur la figure 2. La butée 44 tape, par conséquent, perpendiculairement sur la contre-butée 46 sans aucune friction et sans risque de serrage ou de blocage.

L'emplacement de la butée 44 et de la contre-butée 46 n'est qu'un exemple de réalisation. La butée 44 pourrait, par exemple, être prévue sur la face intérieure d'une jupe périphérique du volant 42 et la contre-butée pourrait être prévue sur la surface extérieure du corps 34.

La butée 44 et la contre-butée 46, au lieu de former une partie intégrante de la tige 40, respectivement du corps 34, obtenue, par exemple, par usinage, pourraient être formées par des goupilles rendues solidaires de ces pièces.

Par ailleurs, la tige 40 pourrait être lisse sur toute sa hauteur et son mouvement axial pourrait être engendré par un filetage prévu sur la face intérieure d'une jupe cylindrique solidaire du volant 42 et collaborent avec un filetage correspondant à l'extérieur du corps 34.

Finalement, le volant pourrait être remplacé par une tête polygonale qui serait actionnée par une clef spéciale.

## Revendications

1. Robinet pour le contrôle de l'écoulement d'un fluide comprenant un corps de robinet (34), un organe intérieur d'ouverture et de fermeture (36) du passage du fluide, un organe de manoeuvre rotatif extérieur (42) manoeuvrable sur plusieurs tours de rotation, un moyen de liaison (40) reliant l'organe de manoeuvre (42) à l'organe de fermeture (36), ainsi que des moyens limitant le mouvement de l'organe de manoeuvre (42) et de l'organe d'ouverture et de fermeture (36) dans le sens de l'ouverture du robinet, **caractérisé en ce que** lesdits moyens limitant le mouvement de l'organe de manoeuvre sont constitués par une butée radiale (44) et une contre-butée radiale (46), disposées respectivement sur un élément rotatif et sur le corps du robinet (34) ou vice-versa et dont le contact mutuel frontal ne s'établit que lors du dernier tour de rotation de l'organe de manoeuvre.

2. Robinet selon la revendication 1, **caractérisé en ce que** la butée (44) est disposée sur une tige de liaison (40) entre l'organe de manoeuvre (42) et l'organe de fermeture (36) et la contre-butée (46) sur la paroi intérieure du corps (34) du robinet

## Claims

1. A valve for controlling the flow of a fluid, comprising a valve body (34), an internal member (36) for opening and closing the fluid passage, an external rotary actuating member (42) actuatable over several revolutions, a connecting means (40) connecting the actuating member (42) to the closing member (36), together with means limiting the movement of the actuating member (42) and the opening and closing member (36) in the valve opening direction, **characterised in that** said means limiting the movement of the actuating member consist of a radial abutment (44) and a radial counter-abutment (46) arranged respectively on a rotary element and on the valve body (34) or vice versa and whose mutual frontal contact is established only at the time of the final revolution of the actuating member.

2. A valve according to claim 1, **characterised in that** the abutment (44) is arranged on a connecting rod (40) between the actuating member (42) and the closing member (36); and the counter-abutment (46) is arranged on the internal wall of the valve body (34)

## Patentansprüche

1. Ventil für die Kontrolle der Strömung eines Mediums mit einem Ventilkörper (34), einem inneren Organ für die Freigabe und die Unterbrechung (36) der Strömung des Mediums, einem äußeren Drehorgan (42), das über mehrere Drehungen betätigbar ist, einem Verbindungsmittel (40), um das Betätigungsorgan (42) mit dem Unterbrechungsorgan (36) zu verbinden, sowie mit Mitteln, welche die Bewegung des Betätigungsorgans (42) und des Freigabe- und Unterbrechungsorgans (36) in der Richtung der Öffnung des Ventils begrenzen, **dadurch gekennzeichnet, dass** die Mittel zur Begrenzung der Bewegung des Betätigungsorgans durch einen radialen Anschlag (44) und einen radialen Gegenanschlag (46) gebildet sind, welche auf einem Drehelement beziehungsweise auf dem Ventilkörper (34) oder umgekehrt angeordnet sind und erst bei der letzten Drehung des Betätigungsorgans stirnseitig gegeneinander zur Anlage kommen

2. Ventil nach Anspruch 1, **dadurch gekennzeichnet, dass** der Anschlag (44) auf einem Verbindungsstift (40) zwischen dem Betätigungsorgan (42) und dem Unterbrechungsorgan (36) und der Gegenanschlag (46) an der Innenwand des Ventilkörpers (34) angeordnet sind
